# EUROPEAN PATENT APPLICATION

(11) **EP 3 094 034 A1**
(43) Date of publication of application: **16.11.2016**
(21) Application number: 16153225.4
(22) Date of filing: 28.01.2016
(51) Int. Cl.: H04L 1/18, H04L 5/00

(54) **CONTROL CHANNELS IN WIRELESS COMMUNICATION**

(30) Priority: 14.05.2015 GB 201508273
(71) Applicant: FUJITSU LIMITED, Kawasaki-shi, Kanagawa 211-8588 (JP)
(72) Inventor: MOULSLEY, Timothy, Caterham, Surrey CR3 5EE (GB)
(74) Representative: Stebbing, Timothy Charles

(57) **Abstract**

A technique for reducing the probability of false alarms leading to responses of terminals (1) to control channel messages in a wireless communication system, false alarms being when a terminal detects and responds to a control channel message when no such message was sent. This is a particular problem in carrier aggregation in LTE when large numbers of carriers may be configured for a terminal. The terminal is expected to blindly search for a number of possible control channel messages from the base station (21, 22, ... 2n) for each carrier, and determine whether such a message has been correctly received by means of a Cyclic Redundancy Check. With a large number of candidates the probability of falsely detecting a message and responding (e.g. with an erroneous uplink transmission causing interference) can be significant. It is assumed that when there is active data transmission, more than one message (or data packet) is likely to be sent to the terminal (1) at any given moment. Thus by making the validity of a control channel message depend on additional conditions being satisfied, the probability of false alarm can be greatly reduced, without otherwise impacting system operation, for example if the terminal (1) only responds if two (or more) messages with particular characteristics are received in the same subframe.

## Description

### Field of the Invention

The present invention relates to wireless communication systems, for example systems based on the 3GPP Long Term Evolution (LTE) and 3GPP LTE-A groups of standards, and more particularly to mechanisms by which terminals can be prevented from responding erroneously to control channel messages.

### Background of the Invention

Wireless communication systems are widely known in which base stations (BSs) form "cells" and communicate with terminals (also called user equipments (UEs) or mobile stations) within range of the BSs.

In such a system, each BS divides its available bandwidth, i.e. frequency and time resources in a given cell, into individual resource allocations for the user equipments which it serves. The UEs are generally mobile and therefore may move among the cells, prompting a need for handovers of radio communication links between the base stations of adjacent cells. A UE may be in range of (i.e. able to detect signals from) several cells at the same time. In the simplest case, the UE communicates with one "serving" or "primary" cell (PCell), relying exclusively on this PCell for time and frequency resources needed for wireless communication. However, to increase the resources available to the UE, it can be configured to communicate both with the PCell and with one or more secondary cells (Scells). The Scells may be provided at different carrier frequencies than the PCell, using carrier aggregation (see below).

When a UE starts to use a given cell for its communication, that cell is said to be "activated" for that UE, whether or not the cell is already in use by any other UEs. Normally, all the cells will need to be managed by a local controlling node (or by multiple such nodes in close cooperation), such as an eNodeB in LTE.

### Carrier Aggregation (CA)

Techniques for increasing the resources available to UEs include so-called Carrier Aggregation (CA) which has been introduced into 3GPP since LTE Release 10 (incidentally, LTE Release 10 and higher are also referred to as LTE-Advanced, LTE-A). Details of CA as applied to LTE are given in the 3GPP standard TS36.300, hereby incorporated by reference. In CA, two or more Component Carriers (CCs) at different carrier frequencies are aggregated in order to support wider transmission bandwidths up to 100MHz (made up of a maximum of five CCs each having a bandwidth around their carrier frequency of up to 20MHz). A UE may simultaneously receive or transmit on one or multiple CCs depending on its capabilities.

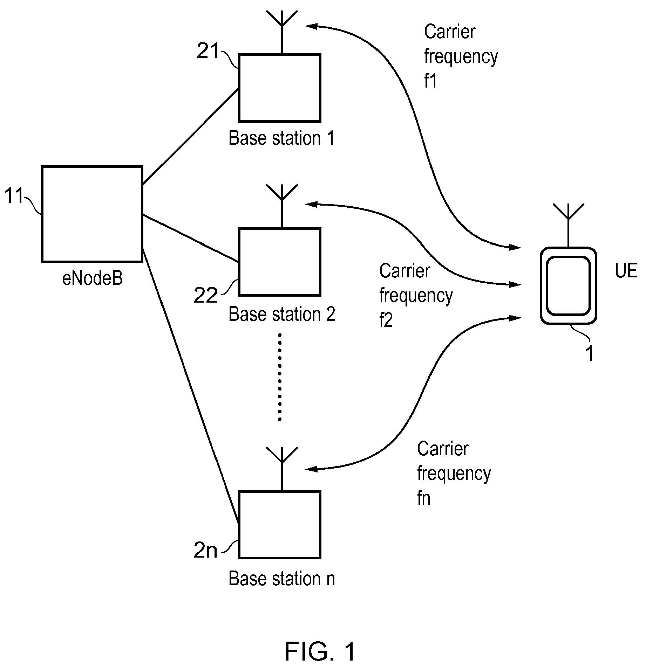

Figure 1 shows an example of a known LTE system (also applicable to the embodiments of the present invention to be described) in which a UE 1 uses carrier aggregation, with an eNodeB 11 controlling cells at carrier frequencies f1, f2......fn. In this case each cell is shown as supported by a different base station 21, 22, . . . 2n, with TDD operation where uplinks and downlinks for each cell are at the same frequency. The base stations here are all controlled by one eNodeB. Other deployment options include the case where all the cells are supported by a single base station which may be co-located with, or included as part of, an eNodeB. Below, the term "base station equipment" is used to denote an eNodeB with or without separate base stations under its control, as well as the above mentioned single base station, and the equivalent apparatus in non-LTE systems.

Generally, one CC corresponds to one cell, and like a cell, each CC used for communication by a UE is "activated" for that UE. Scells may be activated or deactivated but the PCell may not be deactivated. In FDD the Pcell has a corresponding downlink carrier and an uplink carrier at different frequencies. These could be described as Downlink Primary Component Carrier (DL PCC) and Uplink Primary Component Carrier (UL PCC) respectively. An Scell has a downlink carrier and may also have an uplink carrier. Incidentally, in this specification the terms "carrier" and "cell" are used somewhat interchangeably; it should be borne in mind, however that although different carrier frequencies always imply different cells, the reverse is not necessarily the case: a single carrier frequency can support one or more cells.

Therefore, a UE using CA may have a plurality of serving cells, one for each CC, and as well as possibly having different carrier frequencies as illustrated in Figure 1, the cells may have different bandwidths. Generally, each cell is provided by base station antennas at a single site, but this does not exclude the possibility of one cell being provided by antennas at different sites.

### Frame Structure

In a wireless communication system such as LTE, data for transmission on the downlink is organised in OFDMA frames each divided into a number of sub-frames. Various frame types are possible and differ between frequency division duplex (FDD) and time division duplex (TDD) for example. In a generic frame structure for LTE, a frame of duration 10 ms is divided into 20 equally sized slots of 0.5 ms. A sub-frame (or transmission time interval) consists of two consecutive slots, so one radio frame contains 10 sub-frames.

For each subframe, a new scheduling decision is taken regarding which UEs are assigned to which time/frequency resources during the subframe. Scheduling decisions are taken at the eNodeB, using a scheduling algorithm which takes into account the radio link quality situation of different UEs, the overall interference situation, Quality of Service requirements, service priorities, etc.

### Channels

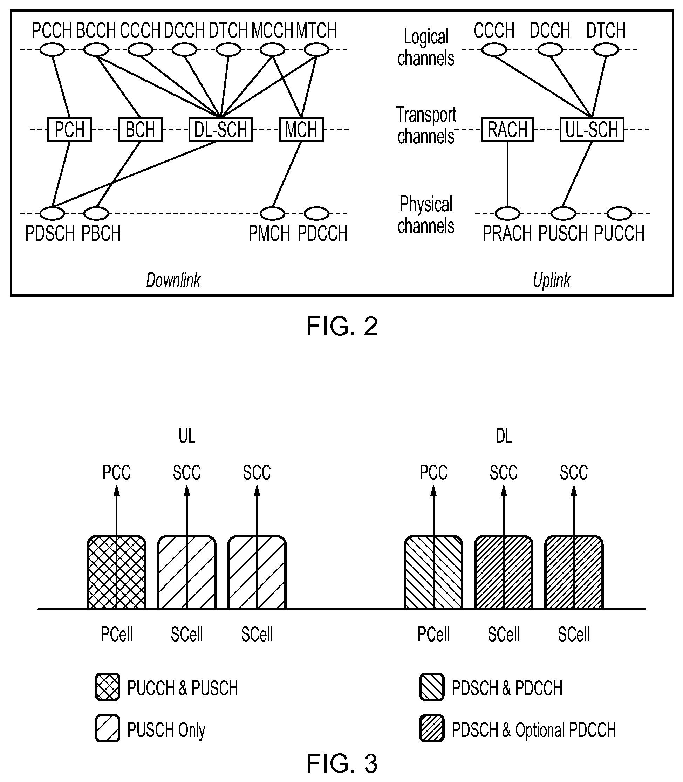

In LTE, several channels for data and control signalling are defined at various levels of abstraction within the system. Figure 2 shows some of the channels defined in LTE at each of a logical level, transport layer level and physical layer level, and the mappings between them. For present purposes, the channels at the physical layer level are of most interest.

On the downlink, user data is carried on the Physical Downlink Shared Channel (PDSCH). There are various control channels on the downlink, which carry signalling for various purposes including so-called Radio Resource Control (RRC), a protocol used as part of radio resource management, RRM. Higher layer signalling in the downlink, such as RRC, is typically carried on the PDSCH. Downlink physical layer signalling is carried by Physical Downlink Control Channel (PDCCH) or Enhanced PDCCH (EPDCCH) (see below).

Meanwhile, on the uplink, user data and also some signalling data is carried on the Physical Uplink Shared Channel (PUSCH). By means of frequency hopping on PUSCH, frequency diversity effects can be exploited and interference averaged out. The control channels include a Physical Uplink Control Channel, PUCCH, used to carry signalling from UEs including channel state information (CSI), as represented for example by channel quality indication (CQI) reports, and scheduling requests. If PUSCH transmission occurs when the PUCCH would otherwise be transmitted, the control information to be carried on PUCCH may be transmitted on PUSCH along with user data. Simultaneous transmission of PUCCH and PUSCH from the same UE may be supported if enabled by higher layers.

Because transmissions between UE and base station are prone to transmission errors due to interference, a procedure is available for each packet sent in uplink and downlink direction to be acknowledged by the receiver. This is done by sending Hybrid Automatic Repeat Request (HARQ) acknowledgments or non-acknowledgments (ACK/NACK) on control channels. On the downlink, ACK/NACK is sent on a Physical HARQ Indicator Channel (PHICH). On the uplink ACK/NACK is sent on PUCCH (or may be sent on PUSCH along with user data).

Generally speaking, the above mentioned channels may each be transmitted on a persubframe basis; that is they may occur in some or all subframes and may carry different signalling data in each subframe in which they are transmitted.

### PDCCH and DCI

In LTE, both the DL and UL are fully scheduled since the DL and UL traffic channels are dynamically shared channels. This means that PDCCH must provide scheduling information to indicate which users should decode the physical DL shared channel (PDSCH) in each sub-frame and which users are allowed to transmit on the physical UL shared channel (PUSCH) in each sub-frame. PDCCH is used to carry scheduling information - called downlink control information, DCI - from eNodeBs to individual UEs. Conventionally, one PDCCH message contains one item of OCI (referred to below as "one DCI" for convenience). This DCI is often intended for one individual UE, but some messages are also broadcast (e.g. intended for multiple UEs within a cell). Thus PDCCH can also contain information intended for a group of UEs, such as Transmit Power Control (TPC) commands. In addition the PDCCH can be used to configure a semi-persistent schedule (SPS), where the same resources are available on a periodic basis. Below, the terms PDCCH, PDCCH message, DCI and DCI message are used interchangeably unless the context demands otherwise. DCI is one important type of content of a "control channel message" referred to below. The term control channel message is used to denote control signalling to a UE whether carried on PDCCH or in other ways (e.g. via EPDCCH, which has many similarities with PDCCH and for which much of the explanation on PDCCH also applies).

A cyclic redundancy check (CRC) is used for error detection of the DCI. The entire PDCCH payload is used to calculate a set of CRC parity bits, which are then appended to the end of the PDCCH payload. Thus, strictly speaking, the CRC applies to the whole of a control channel message which may contain other control information apart from DCI. As multiple PDCCHs relevant to different UEs can be present in one sub-frame, the CRC is also used to specify which UE a PDCCH is relevant to. This is done by scrambling the CRC parity bits with a Radio Network Temporary Identifier (RNTI) of the UE. Various kinds or RNTI are defined in LTE. As one example, the C-RNTI is used by a given UE while it is in a particular cell, after it has successfully joined the network by performing a network entry process with that cell.

Thus a UE could consider DCI message to have been detected if the CRC for the corresponding PDCCH codeword is correct, taking into account scrambling by the appropriate RNTI. It should be noted that there may be additional methods for a UE to determine whether a DCI message has been correctly or incorrectly received, and correspondingly whether it should be considered as "detected" or otherwise. For example, if a DL assignment is received for a carrier which is not activated, this DCI should be considered as incorrectly received. A given PDCCH may be transmitted in any one of a number of given locations (which is a search space comprising a pre-determined subset of all the possible locations). The UE attempts blind decoding of the PDCCH in each location within the search space.

Each different type of message is conveyed using a different DCI format. Many PDCCH messages are each intended to be received by only one specific UE, others are intended for more than one UE. The size of the DCI depends on a number of factors, and thus it is necessary that the UE is aware of the size of the DCI, either by RRC configuration or by another means to signal the number of symbols occupied by PDCCH. Since, as already mentioned, multiple UEs can be scheduled within the same sub-frame, conventionally therefore multiple DCI messages are sent using multiple PDCCHs.

The format to be used depends on the purpose of the control message. For example, DCI format 1 is used for the assignment of a downlink shared channel resource when no spatial multiplexing is used (i.e. the scheduling information is provided for one code word transmitted using one spatial layer only). The information provided enables the UE to identify the resources, where to receive the PDSCH in that sub-frame, and how to decode it. This kind of DCI is referred to below as a "DL assignment" and is of particular relevance to the present invention. Besides the resource block assignment, this also includes information on the modulation and coding scheme and on the hybrid ARQ protocol used to manage retransmission of non-received data. Another type of DCI is an uplink grant, which gives the UE permission to transmit on the uplink using PUSCH

### EPDCCH

A new control channel design (EPDCCH) is provided in LTE-A, which transmits DCI messages using resources in a similar way to downlink data (i.e. like PDSCH). EPDCCH may be transmitted in either a frequency-localized or a frequency-distributed manner depending on the requirements of the system. Localized transmission would be appropriate if the channel /interference properties are frequency selective, in which case it may be possible to transmit DCI messages in a favourable location in the frequency domain for a given UE. In other cases, for example if no frequency selective channel information is available at the eNodeB, distributed transmission (corresponding to the manner of transmission of PDCCH) would be appropriate.

The design for distributed EPDCCH is similar to PDCCH i.e. some resources are configured for distributed EPDCCH, the UE has a blind decoding search space within those resources, and a given DCI message will use a set of resources spread across the frequency domain.

### Channels in CA

Having outlined some of the more important channels defined in LTE, their relationship to cells/CCs in the CA scenario can now be described using Figure 3.

As shown in Figure 3, the PCell (DL PCC) can transmit PDCCH to a UE. An SCell may (or may not) provide PDCCH to a UE on the corresponding DL SCC, depending on UE capabilities; however, uplink data on PUSCH can be transmitted by a UE having the required capabilities, on both PCell and SCell. Correspondingly there is a separate transport channel UL-SCH for each cell. For LTE up to and including Release 11 the uplink control channel (PUCCH) is only transmitted on the PCell (UL PCC). Similarly, PRACH for scheduling requests is only transmitted on the PCell. However, these restrictions may not apply in future Releases.

If an SCell is not configured to carry PDCCH for a UE, this implies that the scheduling information for that cell has to be carried in PDCCH of another cell (usually the PCell) - so called cross-carrier scheduling. The PCell and SCells should have identical or very similar transmission timing which allows, for example, PDCCH on one cell to schedule resources on a different cell, and ACK/NACKs for PDSCH transmissions on SCells to be sent on the PCell. SCells may have different transmission timing at the UE in order to allow for the possibility that the cells are supported by antennas at different geographical sites. Because of the tight timing synchronization requirements between PUCCH on the PCell and PDSCH on the SCells, PCells and SCells can be assumed to be controlled by the same eNodeB.

Incidentally, it is possible for an SCell to have an enhanced role for control purposes, for example, when configured to provide Dual Connectivity, to coordinate a group of cells in which no PCell is present. Such an SCell can be referred to as a Primary Secondary cell or PSCell.

To summarise and expand upon some of the above, in LTE-A two downlink control channels are defined (PDCCH and EPDCCH) which can be used to transmit control information to UEs. Typically the control channel messages contain DCI (Downlink Control Information) and are used to indicate resources and other information concerning downlink data transmissions from the network on PDSCH ("DL assignments"), or uplink data transmissions which can be made by a UE on PUSCH. Usually one DCI is relevant for one UE and for one subframe.

Typically the UE is configured, in every downlink subframe, to attempt reception of a number of different candidate messages which might be transmitted on a control channel, and usually each candidate would be associated with different control channel resources. The UE can detect correct reception of a message (codeword) by checking the CRC and confirming that it is the intended recipient by the presence of a particular identity indication (for example a specific value of CRNTI). If the UE detects an uplink grant, it will make a corresponding transmission on PUSCH. If the UE detects a downlink assignment it will attempt to decode the corresponding downlink transmission on PDSCH, sending an ACK or NACK as appropriate, typically on the uplink control channel (PUCCH). In the case that PUSCH is transmitted on the uplink, the ACK/NACKs may be also sent on the PUSCH rather than the PUCCH.

In carrier aggregation (CA) multiple carriers at different frequencies may be configured for a terminal (via higher level RRC signalling), and these carriers may be activated or deactivated by higher layer MAC signalling. The UE may therefore be required to search for a set of control channel message candidates for each activated carrier. One carrier is permanently activated (the Primary Cell or PCell) and other configured carriers may be activated or deactivated (the secondary cells or SCells). In LTE the PCell and Scells are controlled by, and resources scheduled by, the same eNodeB. After the relevant DCI(s) have been received, the UE attempts to decode the corresponding codeword, and typically sends ACK for a successfully decoded codeword (i.e., successful CRC), sending NACK otherwise. In the case of multiple DL assignments indicating PDSCH transmissions in a given subframe, the UE will acknowledge reception by transmitting the corresponding ACK/NACKs on the PCell. The number of ACK/NACK bits is fixed by the number of CCs configured (rather than the number of CCs being activated): that is, one ACK/NACK message can be sent covering all configured CCs, and in which each bit represents a respective CC.

Downlink control channel messages in LTE often contain DCI (Downlink Control Information), and DCI scheduling of the resources for a given carrier may be transmitted on the same carrier ("self-scheduling") or a different carrier "cross-carrier scheduling"). Using multiple input multiple output (MIMO) antenna techniques, spatial multiplexing can be used to send more than one codeword to a UE using the same time/frequency resources. In this case, the presence of more than one spatially multiplexed codeword on PDSCH would be indicated in a single DCI. In LTE the multiple ACK/NACKs for multiple codewords received at the same time (same subframe) can be transmitted in the same uplink message, whether the codewords were sent by spatial multiplexing or on multiple carriers, or both. Depending on the capabilities of the UE and base stations, MIMO may be applied only the PCell, or on both PCell and one or more Scells, or on neither.

CA can be configured for both FDD (where at least the Pcell has a downlink and uplink on different carrier frequencies, but an Scell may have only downlink or only uplink in use) and TDD (where uplink and downlink for an PCell, or Scell, are on the same carrier frequency). In LTE TDD the ACK/NACKs for codewords received in more than one subframe can be sent in the same uplink message.

As already mentioned, in CA currently the maximum number of carriers configurable per UE is 5. However, 3GPP RAN1 is currently discussing extensions to CA where the maximum number of carriers that are supported will be increased from 5 to 32.

The probability of a "false alarm" on control channel reception by the UE is non-zero and there is a real possibility of the UE detecting and responding to control channel messages (DCI) when no such message was sent. This could occur for example when receiving a control transmission intended for a different UE with low SNR such that some of the bits are decoded incorrectly, or where no transmission is present and random noise or interference is processed as if it was a valid signal. With a large number of candidates, under some conditions the probability of a UE falsely detecting a message and responding (e.g. with an erroneous uplink transmission) can be significant in any given subframe.

If the UE is configured with multiple carriers, it would usually search for a control channel message for multiple candidates for each carrier, and the false alarm probability is therefore likely to scale linearly with the number of carriers (i.e. up to 32 times higher than for a single carrier). Means of reducing the false alarm probability and mitigating the effects of false alarms are of interest. The false alarm probability can be reduced by increasing the number of bits in the CRC. However, this would increase the size of the DCI message, which is undesirable.

A particular problem case arises for DCI of DL assignments indicating DL transmission of PDSCH. Whenever the UE detects any DL assignment(s) (i.e. the CRC indicates that the PDCCH codeword(s) containing the DCI(s) have been correctly decoded) and attempts decoding the corresponding PDSCH(s), the UE will send ACK/NACK(s) indicating correct reception of the PDSCH(s) (or otherwise). In LTE the number of ACK/NACK bits corresponds to all the number of configured CCs, even if not all the CCs are activated or involved in transmission of PDSCH, including where a DL assignment is the result of a false alarm. Therefore if the ACK/NACK transmission by the UE is due only to a false alarm, this will lead to uplink interference and potentially corruption of other transmissions (e.g. from other UEs).

Thus, a problem exists of how to control transmission of responses by terminals to control channel messages, to avoid false alarms and erroneous uplink transmissions.

### Summary of the Invention

According to a first aspect of the present invention, there is provided a terminal for use in a wireless communication system, arranged to receive a plurality of messages on a plurality of channels wherein the transmission by the terminal of a response to reception of a first message on a first one of the plurality of channels is conditional upon at least:
the first one of the plurality of channels being a control channel; and
the terminal receiving a first correctly decoded codeword in the first message;
and the terminal is configured such that an additional condition can be applied to the transmission of said response wherein the additional condition is:
the terminal receiving a second correctly decoded codeword in a second message on a second one of the plurality of channels.

Thus, the terminal can be arranged to make a response only if it receives a correct codeword in a first channel as well as receiving another codeword, which could be on another control channel, or on a channel not necessarily thought of as a control channel (such as PDSCH). The first and second codewords will normally be codewords received in the same subframe. The above mentioned response may be, or at least may include, an indication of correct reception of the second codeword.

A preferred embodiment of the present invention is for use in an LTE-based wireless communication system in which the messages are downlink control information, DCI, messages transmitted on a physical downlink control channel, such as PDCCH or EPDCCH.

In one important case covered by the present invention, the first message assigns downlink resources on a first carrier to the terminal. In other words it is a "DL assignment" as referred to in the detailed description. Meanwhile the second message may assign uplink resources to the terminal, or may be a DL assignment which assigns downlink resources on a second carrier to the terminal.

In an embodiment, the terminal is arranged to perform wireless communication via a plurality of carriers, and said additional condition is only applied when a number of carriers activated for the terminal exceeds a threshold.

As already mentioned, the presence of different carriers implies multiple cells. Thus, in another embodiment the terminal is arranged to perform wireless communication via a plurality of cells and the terminal is configured with a plurality of groups of said cells. In other words, the terminal is configured to classify the cells by which it communicates into groups for the purpose of managing transmission of responses to control channel messages. Received messages are then likewise classified by the terminal according to the cell on which each is received.

In this embodiment, preferably, the above mentioned first correctly decoded codeword in the first message is required to be from a cell in a specific group or groups. That is, the terminal applies the additional condition only when the terminal receives the first correctly decoded codeword from a cell in a specified subset of said groups of cells.

As another possibility, the terminal only applies the above mentioned additional condition when the first message and second message relate to the same group of cells, the second message having particular characteristics.

Among the above mentioned groups of cells, a first group can include a primary cell and a second group can include only secondary cells. If so, then the terminal may be configured to send an acknowledgement message relating to the first group of cells to the primary cell, and to send an acknowledgement message relating to the second group of cells to one of the secondary cells.

As a further preferable feature, the additional condition is applied only when the terminal is configured to respond to the first message by sending an acknowledgement message using a particular message format, such as a new format for PUCCH for sending ACK/NACKs for up to 32 CCs.

In another embodiment, the concept of groups is applied more generally, to received messages rather than to cells (or exclusively to cells). In this case, the terminal is further configured to classify received messages into first, second and third groups such that when the first message is classified into the second group, the additional condition further requires the second message to be in the third group.

Here, the first group can be used to process received messages normally; that is, the terminal may be configured not to apply said additional condition to transmission of said response when the first message is in the first group.

In this embodiment, the terminal may be configured to classify received messages into at least one of the groups according to one or more of:
carrier frequency of a cell for which the received message schedules resources;
whether the received message schedules uplink or downlink resources;
the size of the received message, in terms of number of bits;
the size of the received message, in terms of resources occupied; and
the carrier on which the response of the terminal is configured to be transmitted.

Alternatively, or in addition, at least one of the groups may be defined according to one or more of:
a carrier frequency on which a received message is detected; and
types of channel on which received messages are detected.

The terminal may be further configured to transmit said response to the first message when the first message is classified in the second group, only when resources for transmitting said response are specified by the second message when the second message is classified in the third group.

According to a second aspect of the present invention, there is provided base station equipment in a wireless communication system, arranged to transmit a plurality of messages to a terminal on a plurality of channels, and to configure the terminal such that the transmission by the terminal of a response to reception of a first message on a first one of the plurality of channels is conditional upon at least:
the first one of the plurality of channels being a control channel; and
the terminal receiving a first correctly decoded codeword in the first message;
and to further configure the terminal such that an additional condition can be applied to the transmission of said response wherein the additional condition is:
the terminal receiving a second correctly decoded codeword in a second message on a second one of the plurality of channels.

According to a third aspect of the present invention, there is provided a wireless communication system comprising any terminal as defined above together with base station equipment as defined above.

According to a fourth aspect of the present invention, there is provided a wireless communication method comprising, at a terminal, receiving a plurality of messages transmitted on a plurality of channels by one or more base stations wherein the transmission by the terminal of a response to reception of a first message on a first one of the plurality of channels is conditional upon at least:
the first one of the plurality of channels being a control channel; and
the terminal receiving a first correctly decoded codeword in the first message; characterised by
the terminal applying, as an additional condition upon the transmission of said response, receiving a second correctly decoded codeword in a second message on a second one of the plurality of channels.

A further aspect relates to software for allowing transceiver equipment equipped with a processor to provide a terminal (secondary station) or base station equipment (primary station, such as eNodeB, including or controlling one or more base stations) as defined above. Such software may be recorded on a computer-readable medium.

Thus, embodiments of the present invention involve a method of operating a wireless communication system where a terminal can be configured to respond to a first message (control channel message) only when particular conditions are satisfied. The conditions may include one or more of:
- a second message (control channel message) with particular characteristics is also received (e.g. assigning downlink resources on a different carrier, or granting uplink resources)
- a correctly decoded data codeword is also received

Additional features include defining three groups of DCI messages, messages in the first group being processed normally, while messages in the second group are ignored or discarded unless received together with a message in the third group.

The technique outlined above has the advantage of significantly reducing the probability of false alarms (i.e. a terminal detecting and responding to a message when no such message was sent from a base station). This is a particular problem in carrier aggregation (CA) in LTE when large numbers of carriers may be configured for a terminal (i.e. up to 32 in the current CA work item). The terminal would be expected to blindly search for a number of possible control channel messages from the base station for each carrier, and determine whether such a message has been correctly received by means of a CRC (Cyclic Redundancy Check). With a large number of candidates the probability of falsely detecting a message and responding (e.g. with an erroneous uplink transmission causing interference) can be significant. It may be assumed that when there is active data transmission, more than one message (or data packet) is likely to be sent to a given terminal at any given moment. Thus by making the validity of a control channel message depend on additional conditions being satisfied, the probability of false alarm can be greatly reduced, without otherwise impacting system operation, for example if the terminal only responds in the case that two (or more) messages with particular characteristics are received simultaneously.

In general, and unless there is a clear intention to the contrary, features described with respect to one aspect of the invention may be applied equally and in any combination to any other aspect, even if such a combination is not explicitly mentioned or described herein.

As is evident from the foregoing, the present invention involves signal transmissions between base stations and terminals in a wireless communication system. The term "base station equipment" refers to equipment providing or at least controlling one or more base stations, which can include for example the arrangement shown in Figure 1 with an eNodeB controlling separate base stations 1 to n. A base station may take any form suitable for transmitting and receiving such signals. It is envisaged that the base station equipment will usually take a form proposed for implementation in the 3GPP LTE and 3GPP LTE-A groups of standards, and may therefore include an eNodeB (which term also embraces Home eNodeB or HeNB) as appropriate in different situations. However, subject to the functional requirements of the invention, some or all base stations may take any other form suitable for transmitting and receiving signals from terminals.

Similarly, in the present invention, each terminal may take any form suitable for transmitting and receiving signals from base stations. For example, the terminal may take the form of a subscriber station (SS), or a mobile station (MS), or any other suitable fixed-position or movable form. For the purpose of visualising the invention, it may be convenient to imagine the terminal as a mobile handset (and in many instances at least some of the terminals will comprise mobile handsets), however no limitation whatsoever is to be implied from this.

### Brief Description of the Drawings

Reference is made, by way of example only, to the accompanying drawings in which:
Figure 1 illustrates a wireless communication system employing carrier aggregation (CA);
Figure 2 illustrates channels at each of a plurality of protocol layers in LTE;
Figure 3 shows how LTE physical channels are allocated to a PCell and SCell;
Figure 4 is a flowchart of a process performed in embodiments of the present invention;
Figure 5 is a flowchart of a more specific example of a process performed in one embodiment;
Figure 6 illustrates functional blocks of a terminal (UE) which may be employed in embodiments of the present invention; and
Figure 7 illustrates functional blocks of base station equipment (eNodeB) which may be employed in embodiments of the present invention.

### Detailed Description

This invention is based on the recognition that if a UE is configured with a large number of carriers and they are activated, this would be in the expectation of significant quantities of data to be transmitted or received, frequent use of more than one carrier simultaneously, and transmission of a significant number of ACK/NACK bits in response to multiple data packets. As already mentioned, generally one DCI refers to one CC only, even in the case of cross-carrier scheduling. Therefore most subframes would either contain no DCI messages for a given UE, or several DCI messages.

Under this assumption, in embodiments of the invention, except for certain predetermined cases of a single DCI message (such as for scheduling resources on the PCell, or for DL assignments where at least one codeword on PDSCH is successfully decoded), the UE would only respond to certain combinations of multiple DCI messages, with particular characteristics, detected in the same subframe. Therefore, apart from a limited number of exceptions, the UE would ignore most cases of reception of a single DCI message (which would be the most likely result of false detection of a DCI message). The probability of more than one false detection of a DCI message occurring in the same subframe for any one UE would be very low. Thus the impact of false alarms for the envisaged multi-carrier scenario would be largely mitigated.

This invention proposes determination of the validity of a response to messages on control channels (more particularly but not necessarily exclusively, DCI messages) based on message characteristics not considered for this purpose in the prior art.

In general, unless otherwise indicated, the embodiments described below are applicable to LTE where a UE is configured with multiple carriers (PCell plus one or more Scells). Unless otherwise indicated the embodiments would apply to downlink control channels in general (i.e. and cover both PDCCH and EPDCCH). Also, unless otherwise indicated it is assumed that no spatial multiplexing is used on PDSCH. The use of the invention (or not) by a UE may be configured and controlled by higher layer signalling from the serving eNodeB.

### First Embodiment

In a first embodiment the UE is configured with a PCell and first set of more than one Scell, each on a different carrier frequency. A second set of Scells is activated, where the second set is a subset of the first set. The UE monitors a set of control channel candidates for each activated Scell and also on the Pcell, for DCI messages addressed to it. Owing to the possibility of cross-carrier scheduling, it will be noted that the control channel candidates do not necessarily occur on the same cell as the cell to which each relates. In this embodiment (and some other embodiments) if the UE detects only one DCI message containing a DL assignment for an activated Scell in a given subframe or within a predetermined time window, the UE ignores the message. If the UE detects a total of more than one DCI message each containing a DL assignment for a different activated Scell, it processes these DL assignments normally, that is, decoding the codewords on the corresponding PDSCHs, and sending ACK/NACKs on the PCell. The collection of ACK/NACK bits sent in the uplink on a given cell can be considered as an "ACK/NACK message". In the special case of only one activated Scell, the UE processes DL assignments normally.

It will be noted that the main concern here is with sending one or more NACKs in response to a false alarm. In a system like LTE, if a DL assignment is falsely detected, the UE would attempt to decode the corresponding PDSCH, but since there would actually be no valid PDSCH for this UE, it would be most unlikely that this would appear to correspond to a correct reception of any valid data packet(s) (leading to ACK) and so NACK(s) would be almost inevitable in such a case.

In sub-cases of the first embodiment, the ACK/NACKs may be sent on:
- PUCCH on the PCell; or
- PUSCH on the PCell

In a variation of the first embodiment the UE includes the PCell when counting the number of DL assignments (i.e., DCIs containing a DL assignment of resources for the UE). In this case DL assignments relating to broadcast PDSCHs (i.e. intended for multiple UEs) are not included, because there is no need for the UE to send ACK/NACK in respect of broadcast PDSCH.

Normally, the response is sent in the corresponding subframe to that in which the DL assignments were received (same subframe in the case of FDD, or next available uplink subframe in the case of TDD). In a further variation of the first embodiment, the uplink ACK/NACK message in a given subframe may correspond to ACK/NACKs for PDSCH codewords received in more than one subframe. This embodiment is particularly relevant for TDD where there may not be a one-to-one correspondence between DL and UL subframes.

In a further variation of the first embodiment, ACK/NACK messages containing only NACKs may be discarded and not transmitted, except in some defined special cases (e.g. when a DL assignment is detected for the PCell). The use of this variation may be configured by configuring the UE to use a particular ACK/NACK message format. For example, a new message format for PUCCH is being considered in 3GPP RAN1 for sending ACK/NACKs for up to 32 CCs (which would need to have a size on the order of 128 bits or more, for spatial multiplexing in combination with TDD).

In a further variation of the first embodiment the UE is provided with a threshold N, such that the invention is applied when the number of activated carriers exceeds the threshold. N may be determined by specification, or configured by higher later signalling.

In a further variation of the first embodiment the UE is configured with two groups of cells (which can normally be assumed to be non-overlapping). The invention is applied for one group of cells. For the other group of cells, single DL assignments are not ignored and are processed normally. The purpose of this arrangement is to provide more flexibility: for example the second group can operate in the "legacy" CA manner with up to 5 CCs, whilst the first group of cells (which may be much larger) can operate according to the invention with a total of up to 32 CCs.

### Second Embodiment

A second embodiment is like the first embodiment except that there are two groups of cells configured for the UE. In other words the UE is configured in such a way as to be able to classify incoming DCI messages (DL assignments) according to the group of cells to which they relate. For the first group of cells (which includes the PCell) the DL assignments received for the cells of the group result in the corresponding ACK/NACKs being sent on the Pcell. For the second group of cells (which includes only Scells) the DL assignments received for the cells of the group result in the corresponding ACK/NACKs being sent on one of the Scells (i.e., one of the Scells having a special status for the UE, such as the above mentioned SPCell).

In this embodiment, for the purpose of deciding whether or not to send ACK/NACK the UE may count separately the DL assignments in each group, or alternatively the UE could count the aggregated number of DL assignments across all groups.

### Third Embodiment

A third embodiment is like the first embodiment except that three groups of DCI messages are defined. It will be noted that this is a different manner of grouping from one based on cells, in general. For the purposes of determining whether to apply the principle of the invention, the UE classifies DCI messages into one of the groups using criteria given below. Messages in the first group are processed normally by the UE (i.e., without applying the present invention). Messages in the second group are only processed if detected together with an additional message in the third group (otherwise they are not processed).

Different options are possible to the treatment of messages in the third group (but it may not be necessary to specify that behaviour, for example a default behaviour may be set in the system standard, or left to implementation). The first embodiment can be considered as a special case of the third embodiment.

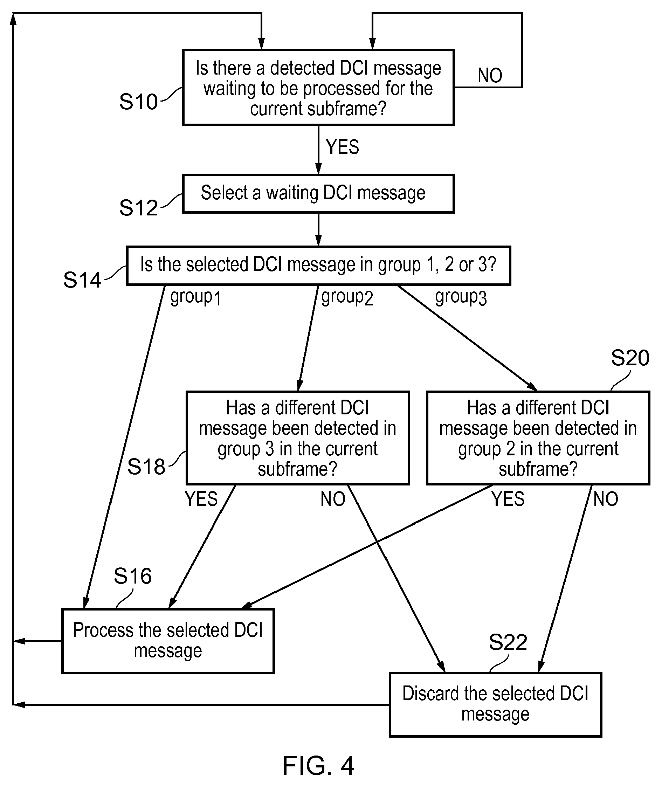

Figure 4 is a flowchart for the third embodiment in the general case, showing steps performed in a UE. In step S10, the UE waits until it has detected one or more DCI message which is waiting to be processed for the current subframe. Once this is the case (S10, YES) the UE selects one such DCI message in step S12. Then (S14) the UE determines which of the above mentioned groups the DCI message falls into, using criteria with which the UE has been configured by the network (and/or which may be preset in the UE in accordance with the system specification). If the message is in the first group, flow proceeds to S16 and the UE processes the message in the normal way (including sending ACK/NACK as appropriate). If the message falls within group 2 then in S18, the UE checks whether or not a different DCI message has been detected in group 3 in the current subframe. If such a message exists (S18, YTES), flow proceeds to S16 and the message is processed in the normal way. If not (S18, NO) then the selected DCI message is discarded in S22 (i.e., not processed). Meanwhile, if in S14 the selected DCI message is judged to be in group 3, then the flow proceeds to S20 in which the UE checks whether a different DCI message was detected in group 2 for the same subframe. If the answer to the determination in S20 is YES then the selected DCI message is processed as normal (S16), otherwise discarded (S22). The above process may be repeated for each other detected message which may be waiting.

Special cases or variations of the third embodiment are as follows:-
(a) The second and third groups are the same
(b) At least one of the groups (up to and including all three groups) is defined according to one or more of:
   ∘ Carrier frequency of the cell for which the DCI schedules resources (for example, DCI messages for cells of the same carrier frequency are grouped together)
   ∘ Whether the DCI schedules uplink or downlink resources
   ∘ The size of the DCI message (in terms of number of bits)
   ∘ The size of the DCI message (in terms of resources occupied) (e.g. the aggregation level in LTE)
   ∘ The carrier on which the ACK/NACKs are transmitted in response to DCI containing DL assignments (e.g. either Pcell or Scell)
(c) Another group (if any is left to be defined) is defined according to one or more features previously proposed of:-
   ∘ Carrier frequency on which the DCI is detected
   ∘ The types of control channel on which messages which are detected
(d) The first group includes DCI messages transmitted on the PCell
(e) The second group corresponds to DCI containing DL assignments and the third group corresponds to DCI containing UL grants which may allocate resources for transmission of ACK/NACKs
(f) The DCI messages in the second and third groups are considered to be "together" if detected within a given time window (e.g. in the same subframe or within some maximum separation in time)
(g) The DCI messages in the second group that are considered to be "not processed" may be rejected, ignored or discarded, or possibly processed but not in a way leading to any transmission in response
(h) The groups are transmitted on different types of control channel (e.g. PDCCH or EPDCCH)
(i) Single DCI messages in the third group are processed normally
(j) Single DCI messages in the third group are not processed

Most of the above possibilities can be regarded as alternatives; however some combinations of the above are feasible, as will be apparent to those skilled in the art. For example (d) could be combined with any of (a) - (c), whilst (e) is mutually exclusive with (a), possibilities (i) and (j) likewise being mutually exclusive but combinable with any of (a) - (h). The criteria applied by the UE on determining how to process (or not) incoming control channel messages can be varied from time to time to adapt to changes in network conditions.

In one of the variations of the third embodiment above, the main problem arising from false alarms in DL assignments (i.e. spurious transmission of ACK/NACKs) is mitigated by transmitting the ACK/NACKs corresponding to multiple DCI in the second group (e.g. PDSCH assignments) by using resources which are specified by a DCI in the third group (e.g. a PUSCH grant specifying resources for the UE to use for both ACK/NACK and data). If a PDSCH assignment is detected without a corresponding PUSCH grant, it is discarded. This variation is a preferred embodiment.

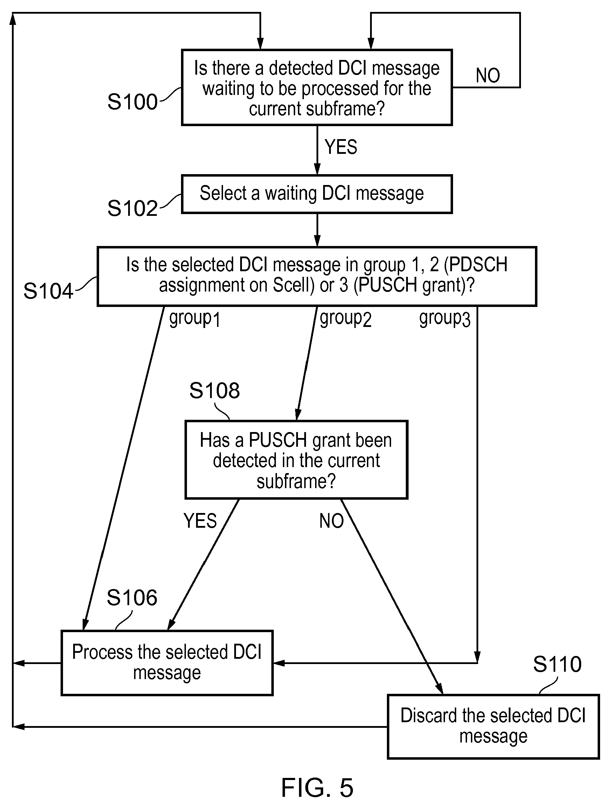

Figure 5 is a flow chart for an example of the third embodiment where the second group comprises DCIs containing DL assignments for PDSCH on an Scell, and the third group comprises DCIs containing a grant of UL resources on PUSCH. Group 1 comprises other DCIs.

Similarly as described with respect to Figure 4, the process performed by the UE begins at S100 with the UE waiting until it has at least one detected DCI message awaiting processing. Then in S102 one such message becomes the selected DCI message. No particular method of selecting DCI messages is assumed here. Selection in turn should be sufficient.

In S104, the UE determines to which of the three groups (as defined above) the selected DCI message belongs. In the case of group 1, the selected DCI message is processed in the normal way in S106. If group 2, the UE proceeds in S108 to check whether or not a PUSCH grant has been detected in the current subframe. If so (S108, YES) then the selected DCI message, is processed as usual in S106. If not (S108, NO) then it is discarded in S110. Meanwhile, if the selected DCI message belongs to group 3 then it is discarded without further consideration (S110).

A fourth embodiment is like the first embodiment except that spatial multiplexing of multiple codewords on PDSCH is used (e.g. two codewords per PDSCH). Then, rather than considering the number of detected control channel messages, the transmission of an ACK/NACK message is determined according to whether one or more PDSCH codewords is successfully decoded (i.e. the codewords have valid CRC). As an example, if one (or more) control channel messages indicate that multiple PDSCH codewords have been transmitted to the UE (which may include by means of one or more of multiple carriers and spatial multiplexing (MIMO)), but none of these codewords has a valid CRC, then no ACK/NACK message is sent (i.e. a message would not contain only NACKs). If any of the PDSCH codewords has a valid CRC then an ACK/NACK message is sent. The probability of the base station being sent an ACK/NACK message when none is expected is greatly reduced, since not only would this require a false alarm on a control channel but also false detection of a codeword. In this approach the base station may need to distinguish between the cases where the UE sends a message with one or more ACKs, and where "no message" is sent. However, this may be preferable to the consequence of an ACK/NACK message being sent due to a false alarm.

As variations of the fourth embodiment, there may be special cases where an "all NACK" message can be sent such as:
- A control message being received on the PCell (as opposed to on an SCell)
- PDSCH being scheduled to the UE on the PCell (rather than on an SCell)
- The NACKs correspond to more one PDSCH being scheduled to the UE on different cells
- The network can accept the consequences of false alarms, so the use of the invention is not applied or configured (e.g. only a small number of carriers are configured or activated)
- The ACK/NACK message would be sent on a cell where false alarms are not a problem (e.g. uplink on a specific one of the cell groups in the second embodiment, where no other UEs happen to be active)

Thus, the prohibition on "all NACK messages" can be restricted to applying only to Scells if desired.

Regarding the 3^{rd} bullet-point above, the difference compared with the first embodiment is that there is no need to consider any particular timing of the control channel messages or PDSCHs: it is only required that the ACK/NACKs are in the same message.

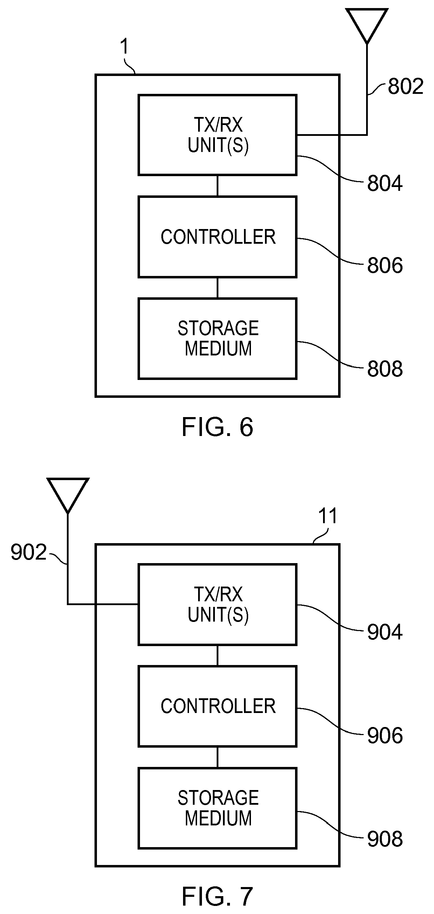

Figure 6 is a block diagram illustrating an example of a UE 1 to which the present invention may be applied. The UE 1 may include any type of device which may be used in a wireless communication system described above and may include cellular (or cell) phones (including smartphones), personal digital assistants (PDAs) with mobile communication capabilities, laptops or computer systems with mobile communication components, and/or any device that is operable to communicate wirelessly. The UE 1 includes transmitter/receiver unit(s) 804 connected to at least one antenna 802 (together defining a communication unit) and a controller 806 having access to memory in the form of a storage medium 808. The controller 806 may be, for example, a microprocessor, digital signal processor (DSP), application-specific integrated circuit (ASIC), field-programmable gate array (FPGA), or other logic circuitry programmed or otherwise configured to perform the various functions described above, in particular the configuration to respond to control channel messages only under the conditions prescribed in one or more of the embodiments. For example, the various functions described above may be embodied in the form of a computer program stored in the storage medium 808 and executed by the controller 806. The transmission/reception unit 804 is arranged, under control of the controller 806, to receive control channel messages from the cells and send ACK/NACK and so forth as discussed previously.

Figure 7 is a block diagram illustrating an example of a primary station suitable for use as an eNodeB 11 and at least one of the base stations 21, 22, ... 2n referred to above (and connected by high-speed backhaul to any other of the base stations). The primary station includes transmitter/receiver unit(s) 904 connected to at least one antenna 902 (together defining a communication unit) and a controller 906. The controller may be, for example, a a microprocessor, DSP, ASIC, FPGA, or other logic circuitry programmed or otherwise configured to perform the various functions described above. For example, the various functions described above may be embodied in the form of a computer program stored in the storage medium 908 and executed by the controller 906. The transmission/reception unit 904 is responsible for transmission of the control channel messages and so on under control of the controller 906. The controller 906 not only manages any integrated base station such as 21 in Figure 1 but also manages any separate base stations not directly controlled by the primary unit.

Thus, to summarise, the present invention may provide that in a system such as LTE the UE can be configured to respond to a first control channel message only when particular novel conditions are satisfied. The conditions include one or more of: a second control channel message with particular characteristics is also received (e.g. assigning downlink resources on a different carrier, granting uplink resources) or at least one correctly decoded data codeword is also received in the same subframe or within a predetermined time window.

Various modifications are possible within the scope of the present invention.

Although one UE was referred to in the above description, in practice of course multiple UEs may be served by the same eNodeB. The eNodeB will generally configure the above mentioned first, second and third groups separately for each UE, although the groups may overlap between UEs. One possibility is that one group stays the same for all UEs with the other groups being different.

Any of the embodiments and variations mentioned above may be combined in the same system. Whilst the above description has been made with respect to LTE and LTE-A, the present invention may have application to other kinds of wireless communication system also. Accordingly, references in the claims to "terminal" are intended to cover any kind of subscriber station, mobile device, MTC device and the like and are not restricted to the UE of LTE.

The expression "DCI message" is only one example of messages for which a response to reception thereof by a terminal can be controlled by means of the present invention. Reference is made above to "control channel messages", and at least some of the messages for which transmission of a response by a UE is controlled by means of the present invention are conveyed via control channels in the normally-understood sense. However, other messages received by the UE may be conveyed by means other than conventional control channels.

In any of the aspects or embodiments of the invention described above, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein.

A computer program embodying the invention may be stored on a computer-readable medium, or it may, for example, be in the form of a signal such as a downloadable data signal provided from an Internet website, or it may be in any other form.

It is to be understood that various changes and/or modifications may be made to the particular embodiments just described without departing from the scope of the claims.

### Industrial Applicability

The invention has the effect of significantly reducing the probability of a response from a terminal due to a false alarm (i.e. a terminal detecting and responding to control channel message when no such message was sent) in carrier aggregation (CA) in LTE when large numbers of carriers may be configured for a terminal. The effect of false alarms can be greatly reduced, without otherwise impacting system operation by applying one of the embodiments of the present invention, for example if the terminal only responds in the case that two (or more) messages with particular characteristics are received simultaneously (e.g., within the same subframe).

## Claims

1. A terminal for use in a wireless communication system, arranged to receive a plurality of messages on a plurality of channels wherein the transmission by the terminal of a response to reception of a first message on a first one of the plurality of channels is conditional upon at least:
the first one of the plurality of channels being a control channel; and
the terminal receiving a first correctly decoded codeword in the first message;
and the terminal is configured such that an additional condition can be applied to the transmission of said response wherein the additional condition is:
the terminal receiving a second correctly decoded codeword in a second message on a second one of the plurality of channels.

2. The terminal according to claim 1 wherein the first message assigns downlink resources on a first carrier to the terminal.

3. The terminal according to claim 1 or 2 wherein the second one of the plurality of channels is a control channel and the second message assigns uplink resources to the terminal, or assigns downlink resources on a second carrier to the terminal.

4. The terminal according to any preceding claim wherein the terminal is arranged to perform at least one of:
wireless communication via a plurality of carriers, wherein said additional condition is only applied when a number of carriers activated for the terminal exceeds a threshold; and
wireless communication via a plurality of cells, wherein the terminal is configured with a plurality of groups of said cells.

5. The terminal according to claim 4 wherein said additional condition is only applied when either:
the terminal receives a first correctly decoded codeword in the first message from a cell in a subset of said groups of cells; or
the terminal receives a first message and second message relating to the same group of cells, the second message having particular characteristics.

6. The terminal according to claim 4 or 5 wherein:
a first group of cells includes a primary cell and a second group of cells includes only secondary cells; and
the terminal is configured to send an acknowledgement message relating to the first group of cells to the primary cell, and to send an acknowledgement message relating to the second group of cells to one of the secondary cells.

7. The terminal according to any preceding claim, wherein the additional condition is applied only when the terminal is configured to respond to the first message by sending an acknowledgement message using a particular message format.

8. The terminal according to any preceding claim further configured to classify received messages into first, second and third groups such that when the first message is classified into the second group, said additional condition further requires the second message to be in the third group.

9. The terminal according to claim 8, wherein the terminal is configured not to apply said additional condition to transmission of said response when the first message is in the first group.

10. The terminal according to claim 8 or 9 wherein the terminal is configured to classify received messages into at least one of the groups according to one or more of:
carrier frequency of a cell for which the received message schedules resources;
whether the received message schedules uplink or downlink resources;
the size of the received message, in terms of number of bits;
the size of the received message, in terms of resources occupied; and
the carrier on which the response of the terminal is configured to be transmitted.

11. The terminal according to claim 8, 9 or 10, wherein at least one of the groups is defined according to one or more of:
a carrier frequency on which a received message is detected; and
types of channel on which received messages are detected.

12. The terminal according to any of claims 8 to 11 wherein the terminal is further configured to transmit said response to the first message when the first message is classified in the second group only when resources for transmitting said response are specified by the second message when the second message is classified in the third group.

13. Base station equipment in a wireless communication system, arranged to transmit a plurality of messages to a terminal on a plurality of channels, and to configure the terminal such that the transmission by the terminal of a response to reception of a first message on a first one of the plurality of channels is conditional upon at least:
the first one of the plurality of channels being a control channel; and
the terminal receiving a first correctly decoded codeword in the first message;
and to further configure the terminal such that an additional condition can be applied to the transmission of said response wherein the additional condition is:
the terminal receiving a second correctly decoded codeword in a second message on a second one of the plurality of channels.

14. A wireless communication system comprising the terminal according to any of claims 1 to 12 and base station equipment according to claim 13.

15. A wireless communication method comprising, at a terminal, receiving a plurality of messages transmitted on a plurality of channels by one or more base stations, wherein the transmission by the terminal of a response to reception of a first message on a first one of the plurality of channels is conditional upon at least:
the first one of the plurality of channels being a control channel; and
the terminal receiving a first correctly decoded codeword in the first message;
**characterised by**
the terminal applying, as an additional condition upon the transmission of said response, receiving a second correctly decoded codeword in a second message on a second one of the plurality of channels.
